# EUROPEAN PATENT APPLICATION

(11) **EP 4 440 213 A1**
(43) Date of publication of application: **02.10.2024**
(21) Application number: 24167655.0
(22) Date of filing: 28.03.2024
(51) Int. Cl.: H04W 60/00

(54) **HANDLING 5GMM STATE AFTER ACTIVATION OF UNAVAILABILITY PERIOD**

(30) Priority: 31.03.2023 IN 202321024801; 24.08.2023 IN 202321056743; 22.03.2024 US 202418613304
(71) Applicant: MediaTek Singapore Pte. Ltd., Singapore 138628 (SG)
(72) Inventor: NIEMI, Marko, Oulu (FI); Puneet, 560037 Bengaluru KA (IN)
(74) Representative: Haseltine Lake Kempner LLP

(57) **Abstract**

A method for managing an unavailability period performed by a user equipment (UE) is provided. The method comprises being registered in a network and choosing a substate of a deregistered state when an unavailability period is activated by the UE using a deregistration procedure or choosing a substate of a registered state when an unavailability period is activated by the UE using a registration procedure.

## Description

The present Application claims priorities of Indian provisional patent applications Ser. No. 202321024801 filed on March 31, 2023 and titled "Handling of 5GMM State after Unavailability Period Activation" and Ser. No. 202321056743 filed on August 24, 2023 and titled "Handling of 5GMM State after Unavailability Period Activation", the disclosure of each of which is incorporated by reference herein in its entirety.

### BACKGROUND OF THE INVENTION

### 1. Field of the Invention

This disclosure generally relates to mobility management for 5G system (5GMM), and more particularly, to a method and device for handling of 5GMM state after activation of an unavailability period.

### 2. Description of Related Art

In a typical mobile communication environment, a User Equipment (UE) (also called as a Mobile Station (MS)), such as a mobile phone (also known as a cellular phone or cell phone), or a tablet Personal Computer (PC) with wireless communication capability may communicate voice and/or data signals with a wireless communication network. The wireless communication between the UE and the wireless communication network may be performed using various Radio Access Technologies (RATs), such as Global System for Mobile communications (GSM) technology, General Packet Radio Service (GPRS) technology, Enhanced Data rates for Global Evolution (EDGE) technology, Wideband Code Division Multiple Access (WCDMA) technology, Code Division Multiple Access 2000 (CDMA-2000) technology, Time Division-Synchronous Code Division Multiple Access (TD-SCDMA) technology, Worldwide Interoperability for Microwave Access (WiMAX) technology, Long Term Evolution (LTE) technology, LTE-Advanced (LTE-A) technology, and New Radio (NR) technology etc. In particular, GSM/GPRS/EDGE technology is also called 2G technology; WCDMA/CDMA-2000/TD-SCDMA technology is also called 3G technology; LTE/LTE-A/TD-LTE technology is also called 4G technology; and NR technology is also called 5G technology.

In the 5G core network, 5GMM procedures are directed to keep track whereabouts of the UE, UE authentication and control integrity protection and ciphering (*see* 3GPP TS 23.501 and 3GPP TS 23.502, the disclosure of each of which is incorporated by reference herein in its entirety).

In 5GMM procedures, an "unavailability period" for a UE is used to execute predetermined events, such as the silent modem resetting, security patch updating, OS upgrading, MODEM SW upgrading and changing to the settings of device reboot MODEM via OMA-DM, and so on. If the UE and network support operation in the unavailability period and any one of the aforementioned events is triggered which causes the UE to be unavailable for a certain period of time, the UE shall activate the unavailability period and store its 5GMM and 5GSM context in USIM or non-volatile memory so as to be able to reuse the context later after the unavailability period.

However, it is undefined that which 5GMM state shall be entered for the UE when the unavailability period is activated. The UE cannot deal with the mo-signalling, mo-data and NAS registration procedure without the information of the 5GMM state.

### SUMMARY OF THE INVENTION

In one aspect of the present disclosure, a method for managing an unavailability period performed by a user equipment (UE) is provided. The method comprises being registered in a network and choosing a substate of a deregistered state when an unavailability period is activated by the UE using a deregistration procedure.

In another aspect of the present disclosure, the chosen substate of the deregistered state is a DEREGISTERED.NO-CELL-AVAILABLE substate.

In yet another aspect of the present disclosure, at the chosen substate of the deregistered state, the UE does not initiate any procedure except for a deactivation procedure of the unavailability period.

In yet another aspect of the present disclosure, the chosen substate of the deregistered state is a DEREGISTERED.NO-CELL-AVAILABLE substate. Moreover, at the chosen substate of the deregistered state, the UE does not initiate any procedure except for a deactivation procedure of the unavailability period.

In yet another aspect of the present disclosure, at the chosen substate of the deregistered state after activation of the unavailability period, the UE does not initiate any procedure except for a procedure of cell and PLMN reselection.

In yet another aspect of the present disclosure, the chosen substate of the deregistered state is a DEREGISTERED.NO-CELL-AVAILABLE substate. Moreover, at the chosen substate of the deregistered state after activation of the unavailability period, the UE does not initiate any procedure except for a procedure of cell and PLMN reselection.

In yet another aspect of the present disclosure, at the chosen substate of the deregistered state after activation of the unavailability period, the UE does not initiate any procedure except for a deactivation procedure of the unavailability period.

In yet another aspect of the present disclosure, the chosen substate of the deregistered state is a DEREGISTERED.NO-CELL-AVAILABLE substate. Moreover, at the chosen substate of the deregistered state after activation of the unavailability period, the UE does not initiate any procedure except for a deactivation procedure of the unavailability period.

In another aspect of the present disclosure, a method for managing an unavailability period performed by a user equipment (UE) is provided. The method comprises being registered in a network and choosing a substate of a registered state when an unavailability period is activated by the UE using a registration procedure.

In yet another aspect of the present disclosure, the substate of the registration state is a SGMM-REGISTERED.NO-CELL-AVAILABLE substate.

In yet another aspect of the present disclosure, at the chosen substate of the registration state, the UE does not initiate any procedure except for a deactivation procedure of the unavailability period.

In yet another aspect of the present disclosure, the chosen substate of the registration state is a SGMM-REGISTERED.NO-CELL-AVAILABLE substate. Moreover, at the chosen substate of the registration state, the UE does not initiate any procedure except for a deactivation procedure of the unavailability period.

In yet another aspect of the present disclosure, at the chosen substate of the registration state after activation of the unavailability period, the UE does not initiate any procedure except for a procedure of cell and PLMN reselection.

In yet another aspect of the present disclosure, the chosen substate of the registration state is a SGMM-REGISTERED.NO-CELL-AVAILABLE substate. Moreover, at the chosen substate of the registration state after activation of the unavailability period, the UE does not initiate any procedure except for a procedure of cell and PLMN reselection.

In yet another aspect of the present disclosure, at the chosen substate of the registration state after activation of the unavailability period, the UE does not initiate any procedure except for a deactivation procedure of the unavailability period.

In yet another aspect of the present disclosure, the chosen substate of the registration state is a SGMM-REGISTERED.NO-CELL-AVAILABLE substate. Moreover, at the chosen substate of the registration state after activation of the unavailability period, the UE does not initiate any procedure except for a deactivation procedure of the unavailability period.

In another aspect of the present disclosure, a user equipment (UE) comprises a processor, memory in electronic communication with the processor, and instructions stored in the memory is provided. The instructions comprise registering the UE in a network and choosing a substate of a deregistered state for the UE when an unavailability period is activated by the UE using a deregistration procedure.

In yet another aspect of the present disclosure, the chosen substate of the deregistered state is a DEREGISTERED.NO-CELL-AVAILABLE substate.

In yet another aspect of the present disclosure, the instructions further comprises not initiating any procedure except for a deactivation procedure of the unavailability period when the UE is at the chosen substate of the deregistered state.

In yet another aspect of the present disclosure, the chosen substate of the deregistered state is a DEREGISTERED.NO-CELL-AVAILABLE substate. Moreover, the instructions further comprise not initiating any procedure except for a deactivation procedure of the unavailability period when the UE is at the chosen substate of the deregistered state.

In yet another aspect of the present disclosure, the instructions further comprises not initiating any procedure except for a procedure of cell and PLMN reselection when the UE is at the chosen substate of the deregistered state after activation of the unavailability period.

In yet another aspect of the present disclosure, the chosen substate of the deregistered state is a DEREGISTERED.NO-CELL-AVAILABLE substate. Moreover, the instructions further comprise not initiating any procedure except for a procedure of cell and PLMN reselection when the UE is at the chosen substate of the deregistered state after activation of the unavailability period.

In yet another aspect of the present disclosure, the instructions further comprises not initiating any procedure except for a deactivation procedure of the unavailability period when the UE is at the chosen substate of the deregistered state after activation of the unavailability period.

In yet another aspect of the present disclosure, the chosen substate of the deregistered state is a DEREGISTERED.NO-CELL-AVAILABLE substate. Moreover, the instructions further comprise not initiating any procedure except for a deactivation procedure of the unavailability period when the UE is at the chosen substate of the deregistered state after activation of the unavailability period.

In yet another aspect of the present disclosure, the methods or instructions according to any one of the preceding aspects of the present disclosure further comprises deactivating the unavailability period by initiating an initial registration or mobile registration update procedure for the UE.

These and other features and advantages of the present disclosure can be more readily understood from the following preferred embodiments with reference to the appended drawings.

### BRIEF DESCRIPTION OF THE DRAWINGS

In order to sufficiently understand the essence, advantages and the preferred embodiments, the following detailed description will be more clearly understood by referring to the accompanying drawings.
FIG. 1 illustrates a state machine diagram for 5GMM of the UE.
FIG. 2 illustrates a method for managing an unavailability period performed by a UE in accordance with a first embodiment of the present disclosure.
FIG. 3 illustrates a method for managing an unavailability period performed by a UE in accordance with a second embodiment of the present disclosure.
FIG. 4 illustrates a method for managing an unavailability period performed by a UE in accordance with a third embodiment of the present disclosure.
FIG. 5 illustrates a method for managing an unavailability period performed by a UE in accordance with a fourth embodiment of the present disclosure.

### DETAILED DESCRIPTION OF THE DRAWINGS

The following description discloses the preferred embodiments. The present disclosure is described below by referring to the embodiments and the figures. Thus, the present disclosure is not intended to be limited to the embodiments shown, but is to be accorded the principles disclosed herein. Furthermore, that various modifications or changes in light thereof will be suggested to a person having ordinary skill in the art and are to be included within the spirit and purview of this application and scope of the appended claims.

The main function of the 5GS (i.e. 5G System) mobility management (5GMM) sublayer is to support the identification, security, mobility of a UE as well as generic message transport. A further function of the 5GMM sublayer is to provide connection management services to the other sublayer or sublayers.

Depending on how they can be initiated, three types of 5GMM procedures can be distinguished as follows: a) 5GMM common procedures; b) 5GMM specific procedures; and c) 5GMM connection management procedures.

Specifically, 5GMM common procedures can always be initiated when the UE is in 5GMM-CONNECTED mode. At any time only one UE initiated a 5GMM specific procedure can be running for each of the access network(s) that the UE is camping in. The 5GMM specific procedure includes registration procedure initiated by the UE and used e.g. to register to the network for 5GS services and establish a 5GMM context, to update the location/parameter(s) of the UE, deregistration procedure initiated by the UE or the network and used to deregister from the network for 5GS services and to release a 5GMM context, and eCall inactivity procedure initiated by the UE and used to deregister from the network for 5GS services and to release a 5GMM context.

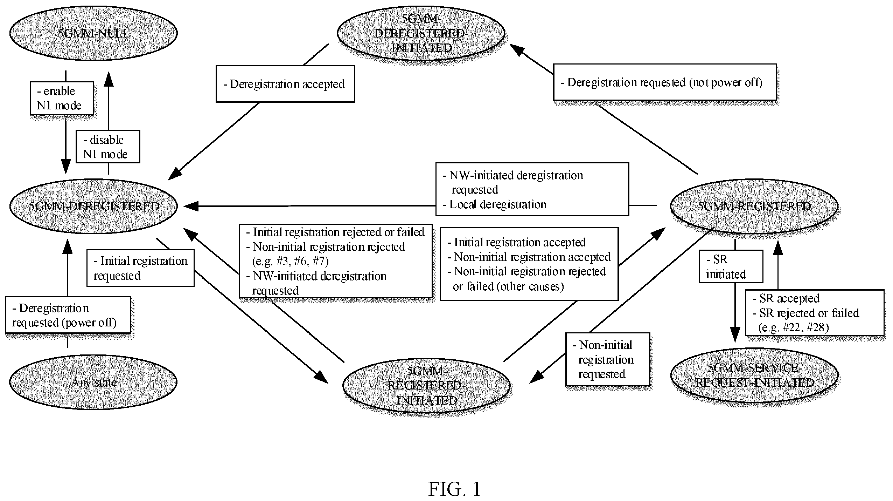

5GMM of the UE can be described by means of different states. Now please refer to FIG. 1 where a state machine diagram for 5GMM of the UE is illustrated. The 5GMM states are managed per access type independently, i.e. 3GPP access or non-3GPP access. The main states for 5GMM include a SGMM-NULL state indicating 5GS services are disabled in the UE and thus no 5GS mobility management function shall be performed in this state. A 5GMM-DEREGISTERED state indicates no 5GMM context has been established. The UE location is unknown to the network and hence it is unreachable by a network. The UE starts an initial registration procedure if the UE wants to establish a 5GMM context, a 5GMM-REGISTERED-INITIATED state is entered after the UE has started the initial registration procedure or the registration procedure for mobility and periodic registration update, and is waiting for a response from the network. A 5GMM-REGISTERED state is entered when a 5GMM context has been established, and one or more PDU session(s) may be established at the UE. The UE may initiate the registration procedure for mobility and periodic registration update and the service request procedure. A 5GMM-DEREGISTERED-INITIATED state is entered after it has requested a release of the 5GMM context by starting the deregistration procedure and is waiting for a response from the network. A 5GMM-SERVICE-REQUEST-INITIATED state is entered after it has started the service request procedure and is waiting for a response from the network.

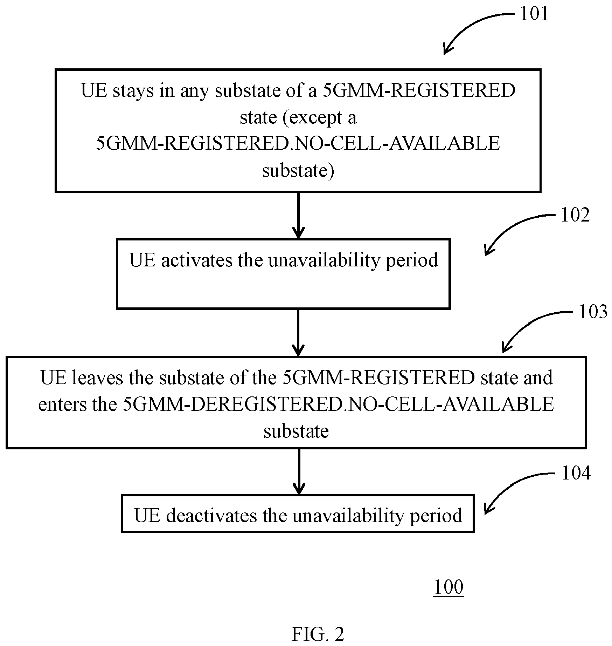

Now please refer to FIG. 2, in which a method (100) for managing an unavailability period performed by a UE is illustrated in accordance with a first embodiment of the present disclosure. The UE is assumed to support the unavailability period, which means UE is unavailable for a certain period of time. The UE may store its 5GMM and 5GSM context in USIM or non-volatile memory in order to reuse/re-store it after the unavailability period is over.

The method (100) starts by that the UE stays in any substate of a 5GMM-REGISTERED state (except a SGMM-REGISTERED.NO-CELL-AVAILABLE substate) (step 101).

Specifically, the 5GMM-REGISTERED state includes lots of substates, such as a 5GMM-REGISTERED.NORMAL-SERVICE substate, a 5GMM-REGISTERED.NON-ALLOWED-SERVICE substate, a 5GMM-REGISTERED.ATTEMPTING-REGISTRATION-UPDATE substate, a 5GMM-REGISTERED.LIMITED-SERVICE substate, a 5GMM-REGISTERED.PLMN-SEARCH substate, a SGMM-REGISTERED.NO-CELL-AVAILABLE substate, and a SGMM-REGISTERED.UPDATE-NEEDED substate. That is, the UE stays in any one of the 5GMM-REGISTERED.NORMAL-SERVICE substate, the 5GMM-REGISTERED.NON-ALLOWED-SERVICE substate, the 5GMM-REGISTERED.ATTEMPTING-REGISTRATION-UPDATE substate, the 5GMM-REGISTERED.LIMITED-SERVICE substate, the 5GMM-REGISTERED.PLMN-SEARCH substate, and the SGMM-REGISTERED.UPDATE-NEEDED substate (step 101).

Then, the UE activates the unavailability period (step 102).

The support for the unavailability period is negotiated in the registration procedure. If the UE is provided with an unavailability period information (e.g., an unavailability period duration) in the last registration procedure or deregistration procedure, the AMF (i.e. Access and Mobility Management Function of the 5G core network) considers the UE unreachable until the UE re-register for a normal service without providing an unavailability period information. During the registration procedure, the AMF may determine the value of the periodic registration update timer provided to the UE based on the unavailability period duration. The AMF releases the N1 signaling connection after the completion of the registration procedure in which the UE provided the unavailability period information.

Then, the UE leaves the substate of the 5GMM-REGISTERED state and enters a 5GMM-DEREGISTERED.NO-CELL-AVAILABLE substate (step 103).

In other words, the method (100) for managing an unavailability period comprises registering the UE in a network, which causes the UE to stay in any substate of the 5GMM-REGISTERED state (except the SGMM-REGISTERED.NO-CELL-AVAILABLE substate) and choosing a substate of a deregistered state, such as, the 5GMM-DEREGISTERED.NO-CELL-AVAILABLE substate, for the UE to enter in when an unavailability period is activated by the UE using a deregistration procedure in accordance with the first embodiment of the present disclosure.

It should be noted that the UE does not initiate any 5GMM procedure except for a procedure of cell and PLMN reselection or a deactivation procedure of the unavailability period at the chosen substate of the deregistered state, such as, the 5GMM-DEREGISTERED.NO-CELL-AVAILABLE substate, after activation of the unavailability period.

It should also be noted that the method (100) further comprises the UE deactivates the unavailability period (104) by initiating an initial registration or mobile registration update procedure.

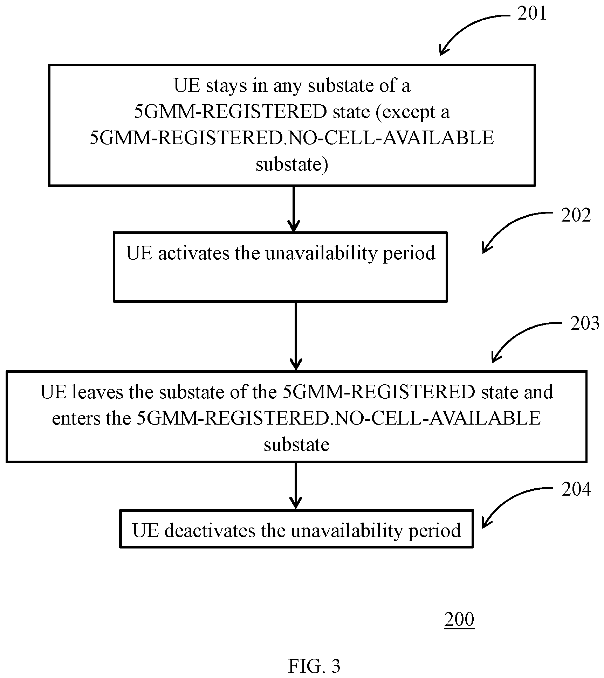

Now please refer to FIG. 3, in which a method (200) for managing an unavailability period performed by the UE is illustrated in accordance with a second embodiment of the present disclosure. The UE is assumed to support the unavailability period, which means UE is unavailable for a certain period of time. The UE may store its 5GMM and 5GSM context in USIM or non-volatile memory in order to reuse/re-store it after the unavailability period is over.

The method (200) starts by that the UE stays in any substate of a 5GMM-REGISTERED state except a SGMM-REGISTERED.NO-CELL-AVAILABLE substate (step 201).

Specifically, the 5GMM-REGISTERED state includes a 5GMM-REGISTERED.NORMAL-SERVICE substate, a 5GMM-REGISTERED.NON-ALLOWED-SERVICE substate, a 5GMM-REGISTERED.ATTEMPTING-REGISTRATION-UPDATE substate, a SGMM-REGISTERED.LIMITED-SERVICE substate, a 5GMM-REGISTERED.PLMN-SEARCH substate, a SGMM-REGISTERED.NO-CELL-AVAILABLE substate, and a SGMM-REGISTERED.UPDATE-NEEDED substate. That is, the UE stays in any one of the 5GMM-REGISTERED.NORMAL-SERVICE substate, the 5GMM-REGISTERED.NON-ALLOWED-SERVICE substate, the 5GMM-REGISTERED.ATTEMPTING-REGISTRATION-UPDATE substate, the 5GMM-REGISTERED.LIMITED-SERVICE substate, the 5GMM-REGISTERED.PLMN-SEARCH substate, or the SGMM-REGISTERED.UPDATE-NEEDED substate of the 5GMM-REGISTERED state (step 201).

Then, the UE activates the unavailability period (step 202).

The support for the unavailability period is negotiated in the registration procedure. If the UE is provided with an unavailability period information (e.g., an unavailability period duration) in the last registration procedure or deregistration procedure, the AMF (i.e. Access and Mobility Management Function of the 5G core network) considers the UE unreachable until the UE re-register for a normal service without providing an unavailability period information. During the registration procedure, the AMF may determine the value of the periodic registration update timer provided to the UE based on the unavailability period duration. The AMF releases the N1 signaling connection after the completion of the registration procedure in which the UE provided the unavailability period information.

Then, the UE leaves the substate of the 5GMM-REGISTERED state and enters the 5GMM-REGISTERED.NO-CELL-AVAILABLE substate (step 203).

In other words, the method (200) for managing an unavailability period comprises registering the UE in a network which causes the UE to stay in any substate of the 5GMM-REGISTERED state (except the SGMM-REGISTERED.NO-CELL-AVAILABLE substate) and choosing a substate of a registered state, such as, the SGMM-REGISTERED.NO-CELL-AVAILABLE substate, for the UE to enter in when an unavailability period is activated by the UE using a registration procedure in accordance with the second embodiment of the present disclosure.

It should be noted that the UE does not initiate any 5GMM procedure except for a procedure of cell and PLMN reselection or a deactivation procedure of the unavailability period at the chosen substate of the registration state, such as, the SGMM-REGISTERED.NO-CELL-AVAILABLE substate, after activation of the unavailability period.

It should also be noted that the method (200) further comprises the UE deactivates the unavailability period (204) by initiating an initial registration or mobile registration update procedure.

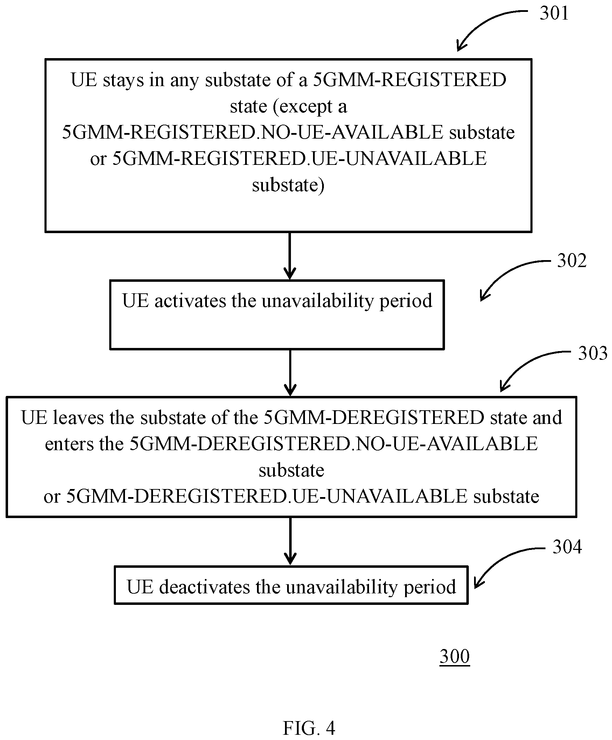

Now please refer to FIG. 4, in which a method (300) for managing an unavailability period performed by the UE is illustrated in accordance with a third embodiment of the present disclosure. The UE is assumed to support the unavailability period, which means UE is unavailable for a certain period of time. The UE may store its 5GMM and 5GSM context in USIM or non-volatile memory in order to reuse/re-store it after the unavailability period is over.

The method (300) starts by that the UE stays in any substate of a 5GMM-REGISTERED state (except a 5GMM-REGISTERED.NO-UE-AVAILABLE substate or 5GMM-REGISTERED.UE-UNAVAILABLE substate) (step 301).

Specifically, the 5GMM-REGISTERED state includes a 5GMM-REGISTERED.NORMAL-SERVICE substate, a 5GMM-REGISTERED.NON-ALLOWED-SERVICE substate, a 5GMM-REGISTERED.ATTEMPTING-REGISTRATION-UPDATE substate, a 5GMM-REGISTERED.LIMITED-SERVICE substate, a 5GMM-REGISTERED.PLMN-SEARCH substate, a SGMM-REGISTERED.NO-CELL-AVAILABLE substate, a 5GMM-REGISTERED.NO-UE-AVAILABLE substate or 5GMM-REGISTERED.UE-UNAVAILABLE substate, and a SGMM-REGISTERED.UPDATE-NEEDED substate. That is, the UE stays in any one of the 5GMM-REGISTERED.NORMAL-SERVICE substate, the 5GMM-REGISTERED.NON-ALLOWED-SERVICE substate, the 5GMM-REGISTERED.ATTEMPTING-REGISTRATION-UPDATE substate, the SGMM-REGISTERED.LIMITED-SERVICE substate, the 5GMM-REGISTERED.PLMN-SEARCH substate, or the SGMM-REGISTERED.UPDATE-NEEDED substate of the 5GMM-REGISTERED state (step 301).

Then, the UE activates the unavailability period (step 302).

The support for the unavailability period is negotiated in the registration procedure. If the UE is provided with an unavailability period information (e.g., an unavailability period duration) in the last registration procedure or deregistration procedure, the AMF (i.e. Access and Mobility Management Function of the 5G core network) considers the UE unreachable until the UE re-register for a normal service without providing an unavailability period information. During the registration procedure, the AMF may determine the value of the periodic registration update timer provided to the UE based on the unavailability period duration. The AMF releases the N1 signaling connection after the completion of the registration procedure in which the UE provided the unavailability period information.

Then, the UE leaves the substate of the 5GMM-REGISTERED state and enters a 5GMM-DEREGISTERED.NO-UE-AVAILABLE substate or 5GMM-DEREGISTERED.UE-UNAVAILABLE substate (step 303).

In other words, the method (300) for managing an unavailability period comprises registering the UE in a network which causes the UE to stay in any substate of the 5GMM-REGISTERED state (except a 5GMM-REGISTERED.NO-UE-AVAILABLE substate or 5GMM-REGISTERED.UE-UNAVAILABLE substate) and choosing a substate of a deregistered state, such as, the 5GMM-DEREGISTERED.NO-UE-AVAILABLE substate or 5GMM-DEREGISTERED.UE-UNAVAILABLE substate, for the UE to enter in when an unavailability period is activated by the UE using a deregistration procedure in accordance with the first embodiment of the present disclosure.

It should be noted that the UE does not initiate any 5GMM procedure except for a procedure of cell and PLMN reselection or a deactivation procedure of the unavailability period at the chosen substate of the deregistered state, such as, the 5GMM-DEREGISTERED.NO-UE-AVAILABLE substate or 5GMM-DEREGISTERED.UE-UNAVAILABLE substate, after activation of the unavailability period.

It should also be noted that the method (300) further comprises the UE deactivates the unavailability period (304) by initiating an initial registration or mobile registration update procedure.

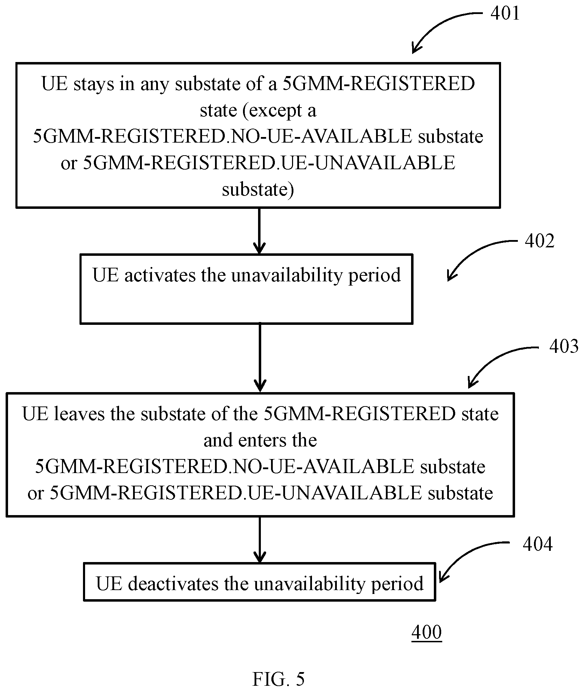

Now please refer to FIG. 5, in which a method (400) for managing an unavailability period performed by the UE is illustrated in accordance with a fourth embodiment of the present disclosure. The UE is assumed to support the unavailability period, which means UE is unavailable for a certain period of time. The UE may store its 5GMM and 5GSM context in USIM or non-volatile memory in order to reuse/re-store it after the unavailability period is over.

The method (400) starts by that the UE stays in any substate of a 5GMM-REGISTERED state (except a 5GMM-REGISTERED.NO-UE-AVAILABLE substate or 5GMM-REGISTERED.UE-UNAVAILABLE substate) (step 401).

Specifically, the 5GMM-REGISTERED state includes a 5GMM-REGISTERED.NORMAL-SERVICE substate, a 5GMM-REGISTERED.NON-ALLOWED-SERVICE substate, a 5GMM-REGISTERED.ATTEMPTING-REGISTRATION-UPDATE substate, a SGMM-REGISTERED.LIMITED-SERVICE substate, a 5GMM-REGISTERED.PLMN-SEARCH substate, a 5GMM-REGISTERED.NO-CELL-AVAILABLE, a SGMM-REGISTERED.UPDATE-NEEDED substate, and a 5GMM-REGISTERED.NO-UE-AVAILABLE substate or 5 GMM-REGISTERED.UE-UNAVAILABLE substate. That is, the UE stays in any one of the 5GMM-REGISTERED.NORMAL-SERVICE substate, the 5GMM-REGISTERED.NON-ALLOWED-SERVICE substate, the 5GMM-REGISTERED.ATTEMPTING-REGISTRATION-UPDATE substate, the SGMM-REGISTERED.LIMITED-SERVICE substate, the 5GMM-REGISTERED.PLMN-SEARCH substate, the 5GMM-REGISTERED.NO-CELL-AVAILABLE, or the SGMM-REGISTERED.UPDATE-NEEDED substate of the 5GMM-REGISTERED state (step 401).

Then, the UE activates the unavailability period (step 402).

The support for the unavailability period is negotiated in the registration procedure. If the UE is provided with an unavailability period information (e.g., an unavailability period duration) in the last registration procedure or deregistration procedure, the AMF (i.e. Access and Mobility Management Function of the 5G core network) considers the UE unreachable until the UE re-register for a normal service without providing an unavailability period information. During the registration procedure, the AMF may determine the value of the periodic registration update timer provided to the UE based on the unavailability period duration. The AMF releases the N1 signaling connection after the completion of the registration procedure in which the UE provided the unavailability period information.

Then, the UE leaves the substate of the 5GMM-REGISTERED state and enters the 5GMM-REGISTERED.NO-UE-AVAILABLE substate or 5 GMM-REGISTERED.UE-UNAVAILABLE substate (step 403).

In other words, the method (400) for managing an unavailability period comprises registering the UE in a network which causes the UE to stay in any substate of the 5GMM-REGISTERED state (except the 5GMM-REGISTERED.NO-UE-AVAILABLE substate or 5 GMM-REGISTERED.UE-UNAVAILABLE substate) and choosing a substate of a registered state, such as, the 5GMM-REGISTERED.NO-UE-AVAILABLE substate or 5 GMM-REGISTERED.UE-UNAVAILABLE substate, for the UE to enter in when an unavailability period is activated by the UE using a registration procedure.

It should be noted that the UE does not initiate any 5GMM procedure except for a procedure of cell and PLMN reselection or a deactivation procedure of the unavailability period at the chosen substate of the registration state, such as, the 5GMM-REGISTERED.NO-UE-AVAILABLE substate or 5 GMM-REGISTERED.UE-UNAVAILABLE substate, after activation of the unavailability period.

It should also be noted that the method (400) further comprises the UE deactivates the unavailability period (404) by initiating an initial registration or mobile registration update procedure.

The preferred embodiments of the present invention have been described above. However, those having ordinary skill in the art readily recognize that the disclosure described above can be utilized in a variety of devices, environments, and situations. Although the present invention is written with respect to specific embodiments and implementations, various changes and modifications may be suggested to a person having ordinary skill in the art. It is intended that the present disclosure encompass such changes and modifications that fall within the scope of the appended claims.

For example, those having ordinary skill in the art would understand that the method can apply not only to 5GS but also to other system with different generation.

For example, those having ordinary skill in the art would understand that a device, such as a UE, may include a processor, memory in electronic communication with the processor, and instructions stored in the memory. The instructions are used to perform the methods in accordance with the preferred embodiments above.

The present invention may also be defined by the following numbered clauses.
1. A method for managing an unavailability period performed by a user equipment (UE), characterized by:
   being registered in a network and choosing a substate of a deregistered state when an unavailability period is activated by the UE using a deregistration procedure.
2. The method of clause 1, wherein the chosen substate of the deregistered state is a DEREGISTERED.NO-CELL-AVAILABLE substate.
3. The method of clause 1 or 2, wherein at the chosen substate of the deregistered state, the UE does not initiate any procedure except for a deactivation procedure of the unavailability period.
4. The method of clause 1 or 2, wherein at the chosen substate of the deregistered state after activation of the unavailability period, the UE does not initiate any procedure except for a procedure of cell and PLMN reselection.
5. The method of clause 1 or 2, wherein at the chosen substate of the deregistered state after activation of the unavailability period, the UE does not initiate any procedure except for a deactivation procedure of the unavailability period.
6. The method of any one of clauses 1 to 5, the method further comprising deactivating the unavailability period by initiating an initial registration or mobile registration update procedure.
7. A method for managing an unavailability period performed by a user equipment (UE), characterized by:
   being registered in a network and choosing a substate of a registered state when an unavailability period is activated by the UE using a registration procedure.
8. The method of clause 7, wherein the chosen substate of the registration state is a 5GMM-REGISTERED.NO-CELL-AVAILABLE substate.
9. The method of clause 7 or 8, wherein at the chosen substate of the registration state, the UE does not initiate any procedure except for a deactivation procedure of the unavailability period.
10. The method of clause 7 or 8, wherein at the chosen substate of the registration state after activation of the unavailability period, the UE does not initiate any procedure except for a procedure of cell and PLMN reselection.
11. The method of clause 7 or 8, wherein at the chosen substate of the registration state after activation of the unavailability period, the UE does not initiate any procedure except for a deactivation procedure of the unavailability period.
12. The method of any one of clauses 7 to 11, the method further comprising deactivating the unavailability period by initiating an initial registration or mobile registration update procedure.
13. A user equipment (UE) comprises a processor, memory in electronic communication with the processor, and instructions stored in the memory, wherein the instructions are characterized by registering the UE in a network and choosing a substate of a deregistered state for the UE when an unavailability period is activated by the UE using a deregistration procedure.
14. The UE of clause 13, wherein the chosen substate of the deregistered state is a DEREGISTERED.NO-CELL-AVAILABLE substate.
15. The UE of clause 13 or 14, wherein the instructions further comprises not initiating any procedure except for a deactivation procedure of the unavailability period when the UE is at the chosen substate of the deregistered state.
16. The UE of clause 13 or 14, wherein the instructions further comprises not initiating any procedure except for a procedure of cell and PLMN reselection when the UE is at the chosen substate of the deregistered state after activation of the unavailability period.
17. The UE of clause 13 or 14, wherein the instructions further comprises not initiating any procedure except for a deactivation procedure of the unavailability period when the UE is at the chosen substate of the deregistered state after activation of the unavailability period.
18. The UE of any one of clauses 13 to 17, wherein the instructions further comprises deactivating the unavailability period by initiating an initial registration or mobile registration update procedure for the UE.

## Claims

1. A method for managing an unavailability period (100, 300) performed by a user equipment, UE, **characterized by**:
being registered in a network and choosing a substate of a deregistered state when an unavailability period is activated by the UE using a deregistration procedure.

2. The method of claim 1, wherein the chosen substate of the deregistered state is a DEREGISTERED.NO-CELL-AVAILABLE substate.

3. The method of claim 1 or 2, wherein at the chosen substate of the deregistered state, the UE does not initiate any procedure except for a deactivation procedure of the unavailability period.

4. The method of claim 1 or 2, wherein at the chosen substate of the deregistered state after activation of the unavailability period, the UE does not initiate any procedure except for a procedure of cell and PLMN reselection.

5. The method of claim 1 or 2, wherein at the chosen substate of the deregistered state after activation of the unavailability period, the UE does not initiate any procedure except for a deactivation procedure of the unavailability period.

6. The method of any one of claims 1 to 5, the method further comprising deactivating the unavailability period by initiating an initial registration or mobile registration update procedure.

7. A method for managing an unavailability period (200, 400) performed by a user equipment, UE, **characterized by**:
being registered in a network and choosing a substate of a registered state when an unavailability period is activated by the UE using a registration procedure.

8. The method of claim 7, wherein the chosen substate of the registration state is a 5GMM-REGISTERED.NO-CELL-AVAILABLE substate.

9. The method of claim 7 or 8, wherein at the chosen substate of the registration state, the UE does not initiate any procedure except for a deactivation procedure of the unavailability period.

10. The method of claim 7 or 8, wherein at the chosen substate of the registration state after activation of the unavailability period, the UE does not initiate any procedure except for a procedure of cell and PLMN reselection.

11. The method of claim 7 or 8, wherein at the chosen substate of the registration state after activation of the unavailability period, the UE does not initiate any procedure except for a deactivation procedure of the unavailability period.

12. The method of any one of claims 7 to 11, the method further comprising deactivating the unavailability period by initiating an initial registration or mobile registration update procedure.

13. A user equipment, UE, comprises a processor, memory in electronic communication with the processor, and instructions stored in the memory, wherein the instructions are **characterized by** registering the UE in a network and choosing a substate of a deregistered state for the UE when an unavailability period is activated by the UE using a deregistration procedure.

14. The UE of claim 13, wherein the chosen substate of the deregistered state is a DEREGISTERED.NO-CELL-AVAILABLE substate.

15. The UE of claim 13 or 14, wherein the instructions further comprises not initiating any procedure except for a deactivation procedure of the unavailability period when the UE is at the chosen substate of the deregistered state; or
wherein the instructions further comprises not initiating any procedure except for a procedure of cell and PLMN reselection when the UE is at the chosen substate of the deregistered state after activation of the unavailability period; or
wherein the instructions further comprises not initiating any procedure except for a deactivation procedure of the unavailability period when the UE is at the chosen substate of the deregistered state after activation of the unavailability period; or
wherein the instructions further comprises deactivating the unavailability period by initiating an initial registration or mobile registration update procedure for the UE.
